Europäisches Patentamt

European Patent Office

Office européen des brevets

(19)

(11) Numéro de publication : **0 073 162 B1**

(12) **FASCICULE DE BREVET EUROPÉEN**

(45) Date de publication du fascicule du brevet :
16.04.86

(51) Int. Cl.⁴ : **G 01 S 7/36**, G 01 S 13/24

(21) Numéro de dépôt : **82401484.9**

(22) Date de dépôt : **05.08.82**

(54) Procédé de protection d'un radar contre les brouillages, et radar pour mettre en œuvre ce procédé.

(30) Priorité : **21.08.81 FR 8116118**

(43) Date de publication de la demande :
**02.03.83 Bulletin 83/09**

(45) Mention de la délivrance du brevet :
**16.04.86 Bulletin 86/16**

(84) Etats contractants désignés :
**CH DE GB IT LI NL SE**

(56) Documents cités :
**US-A- 3 191 173**
**US-A- 3 981 013**
**US-A- 4 130 821**

(73) Titulaire : **LMT RADIO PROFESSIONNELLE**
**46-47, Quai Alphonse Le Gallo**
**F-92103 Boulogne-Billancourt (FR)**

(72) Inventeur : **Petijean, Christian**
**THOMSON-CSF SCPI 173, bld Haussmann**
**F-75379 Paris Cedex 08 (FR)**
Inventeur : **Le Parquier, Guy**
**THOMSON-CSF SCPI 173, bld Haussmann**
**F-75379 Paris Cedex 08 (FR)**

(74) Mandataire : **Desperrier, Jean-Louis et al**
**THOMSON-CSF SCPI 19, avenue de Messine**
**F-75008 Paris (FR)**

EP 0 073 162 B1

Jouve, 18, rue St-Denis, 75001 Paris, France

## Description

La présente invention se rapporte aux procédés de protection d'un radar contre les brouillages, qui permettent d'obtenir une détection correcte en dépit des émissions parasites volontaires destinées à brouiller cette détection. Elle concerne également les radars spécialement adaptés pour mettre en œuvre ce procédé.

Il est connu de brouiller un radar en émettant, de préférence sur la longueur d'onde qu'il utilise, des signaux parasites qui, superposés aux échos qu'il reçoit, perturbent le fonctionnement du récepteur et/ou des appareils d'analyse des signaux détectés par ce récepteur. Le procédé le plus connu consiste à émettre sur la fréquence de ce radar un signal continu à une puissance importante qui sature complètement le récepteur du radar.

Pour échapper à ce brouillage on a mis au point des radars dits à agilité de fréquence, dont on peut faire varier la fréquence d'émission en choisissant celle-ci, soit manuellement soit automatiquement, en fonction de l'environnement parmi un ensemble de fréquences présélectionnées à l'avance. Ce dispositif permet également d'éviter de perturber un autre radar qui fait partie du même système de surveillance que celui qui est en cause.

L'amélioration des radars et des brouilleurs s'est faite simultanément, chacun prenant alternativement l'avantage sur l'autre. Actuellement les systèmes de contre-mesure qui comportent des analyseurs pour déterminer la fréquence d'émission du radar à brouiller, et commander en conséquence le brouilleur, sont capables d'acquérir la fréquence du radar sur un nombre très réduit d'impulsions, de l'ordre de deux ou trois. Pour surmonter cet obstacle il faut donc être capable de changer la fréquence d'émission du radar d'une impulsion à la suivante. Cette caractéristique est difficile à obtenir, mais on peut y arriver. Cependant dans ces conditions il devient impossible de procéder à un traitement Doppler sur les impulsions reçues, car la fréquence doit rester fixe pendant le traitement d'un plot qui est obtenu par le traitement d'une suite d'impulsions.

On connaît d'après le Brevet US-A-3 191 173 un procédé de protection d'un radar contre les brouillages consistant à transmettre deux ondes haute fréquence modulées à des fréquences différentes, mais avec la même séquence d'impulsions, l'écart entre les deux fréquences étant suffisamment grand pour éviter leur brouillage simultané.

On connaît d'autre part d'après le Brevet US-A-3 981 013 un dispositif anti-brouillage de radar émettant simultanément deux signaux, et à la réception, les deux signaux d'écho sont mélangés entre eux, ce qui permet d'affaiblir les signaux de brouillage.

Pour pouvoir émettre cette suite d'impulsions de fréquence fixe sans se faire détecter par le brouilleur, l'invention propose un procédé de protection d'un radar contre les brouillages, dans lequel on émet un signal utile formé d'impulsions ayant une fréquence $f_1$, principalement caractérisé en ce que l'on émet simultanément un signal leurre ayant une amplitude supérieure à celle du signal utile et formé d'impulsions synchrones de celles du signal utile et ayant une deuxième fréquence $f_2$ différente de $f_1$.

D'autres particularités et avantages de l'invention apparaîtront clairement dans la description suivante présentée à titre d'exemple non limitatif et faite en regard des figures annexées qui représentent :

la figure 1, le schéma d'un radar à fréquence fixe ;

la figure 2, le schéma d'un radar à agilité de fréquence.

Le récepteur d'analyse du système de contre-mesure pilotant le brouilleur doit pouvoir détecter l'émission d'un radar en balayant une bande de fréquence assez large dans laquelle se situent un grand nombre de signaux parasites variés. Pour cela il analyse ces signaux selon des critères correspondant aux caractéristiques les plus probables d'un radar. Ceci le conduit, lorsqu'il a détecté une telle émission, à rejeter les autres, tout au moins dans certaines limites qui déterminent une zone aveugle autour de l'émission ainsi détectée.

C'est ainsi que si ce dispositif décèle une succession régulière d'impulsions de fréquence constante avec une puissance importante, il ne pourra pas détecter des impulsions synchrones de celles-ci, ayant une fréquence proche et une puissance plus faible.

Selon l'invention on émet donc un pseudo signal radar, dit signal leurre, à une puissance importante, qui est décelé par le système de contre-mesure, lequel l'analyse comme étant une véritable émission radar. Le système de contre-mesure se verrouille sur cette émission et déclenche la réémission de son brouilleur sur cette même fréquence.

Le radar comprenant le dispositif de protection qui a émis la pseudo émission radar ne comporte pas de moyens de réception et de traitement des échos ou des signaux de brouillage correspondant à cette pseudo émission. Il comporte par contre un second émetteur et des moyens de réception et de traitement correspondants calés sur une fréquence voisine de celle de la pseudo émission ; l'émetteur ayant une puissance inférieure à celle de l'émetteur du signal leurre. Cette émission n'est pas brouillée par le dispositif de contre-mesure qui est aveuglé par la pseudo émission. Les échos correspondant à l'émission utile sont traités dans le récepteur du radar et donnent les informations désirées. Il faut bien entendu que ce récepteur puisse discriminer les échos correspondant à l'émission effective de ceux correspondant à la pseudo émission. Cette discrimination se fait par l'écart de fréquence entre ceux-ci.

Pour que, vu du côté brouilleur, l'émission leurre efface l'émission utile, il faut que sa puissance soit nettement supérieure à celle de l'émission utile. Dans la pratique on prendra un écart d'au moins dix décibels entre ces deux émissions.

Vu du côté radar par contre, il est nécessaire d'avoir un écart de fréquence suffisant pour pouvoir discriminer l'écho utile du signal de brouillage. Dans la pratique on prendra un écart au moins égal à trois fois la bande passante de l'étage à fréquence intermédiaire du récepteur du radar.

Ce procédé, qui s'applique dans tous les cas, est bien entendu utilisable pour les radars à agilité de fréquence. Dans ce cas, pour éviter que le système de contre-mesure, en procédant à une analyse fine des signaux reçus, puisse discerner entre l'émission leurre et l'émission utile, il est intéressant de faire varier la fréquence du signal leurre au même rythme que la fréquence utile en accrochant en phase ces deux fréquences ensemble. En effet, si la fréquence leurre restait constante, ce qui est concevable, il serait plus simple au dispositif de contre-mesure d'éliminer celle-ci dans son traitement, et d'examiner autour de cette fréquence fixe les signaux à fréquence agile susceptibles de constituer les émissions utiles d'un radar.

La solution la plus simple consiste à garder un intervalle de fréquence constant, ce qui permet de générer les deux fréquences simultanément à partir d'un appareillage très simplifié.

Pour augmenter la protection il est par contre utile de faire varier indépendamment les fréquences leurre et utile, tout en évitant, par un système d'exclusion très simple du dispositif de commande, de sélectionner des fréquences trop rapprochées susceptibles de conduire à un brouillage de l'émission utile par l'émission leurre.

Lorsque l'on dispose des moyens permettant d'obtenir des variations de fréquence distinctes, il est alors aisé de réserver des gammes particulières pour l'émission du leurre, afin de pouvoir utiliser dans une même zone un ensemble de radars à agilité de fréquence tout en évitant que le leurre de l'un d'entre eux perturbe les mesures des autres. Pour cela on réservera des bandes distinctes pour les émissions utiles et pour les émissions leurres.

Dans le même cas d'une zone couverte par plusieurs radars distincts, il suffit en fait qu'un seul de ces radars soit muni des moyens permettant d'émettre une émission leurre pour protéger tous les autres.

Toujours dans ce cas d'une zone couverte par plusieurs radars, si l'on peut utiliser un dispositif de transmission de données entre ces radars, il est alors possible de banaliser la bande d'émission pour disposer de toutes celles-ci aussi bien pour l'émission leurre que pour les émissions utiles. En effet en disposant d'un dispositif de commande centralisé, situé par exemple dans un radar maître portant les organes de protection par émission du leurre, on pourra commander les fréquences d'émission des différents radars de la zone de façon à les répartir sur la totalité de la gamme, sans qu'à aucun moment l'émission leurre ne vienne perturber les émissions utiles des plots radars, ni que les émissions utiles ne se brouillent entre elles.

Un perfectionnement de ce procédé consiste à prévoir la possibilité de réduire progressivement l'écart de fréquence entre l'émission leurre et l'émission utile. Ceci est très facile lorsque l'on utilise des synthétiseurs de fréquence commandés numériquement.

Dans ces conditions lorsque l'écart deviendra suffisamment faible, le récepteur du radar commencera à déceler l'émission du brouilleur. Cette détection se fera en utilisant les caractéristiques de l'émission de brouillage selon deux moyens employés éventuellement de manière simultanée.

On peut tout d'abord par un dispositif à seuil constater l'apparition, concomitante avec le rapprochement des fréquences, d'un écho qui devient largement supérieur aux autres. En effet le signal reçu d'un brouilleur est considérablement plus important qu'un simple écho passif. Le circuit à seuil permettra alors de donner l'information de présence du brouilleur.

Comme la plupart des brouilleurs émettent de manière continue, on peut également déceler l'apparition d'un écho continu, qui est donc tout à fait distinct des échos dus à la réflexion du signal utile formé d'impulsions.

Il est clair que l'on n'aura alors le plus souvent que l'indication de gisement du brouilleur sans indication de distance. Cette indication est néanmoins très utile puisqu'elle permet, en concentrant les moyens de détection du radar, au besoin uniquement les moyens d'analyse de manière à ne pas donner l'alerte au dispositif de contre-mesure en gardant l'émission pointée en permanence sur lui, de localiser avec plus de précision l'écho reçu en réponse au signal utile. On pourra même éventuellement faire apparaître un écho qui avait jusque-là disparu dans l'analyse parce qu'il était trop faible par rapport aux autres échos obtenus dans un secteur d'observation plus vaste.

On peut remarquer d'ailleurs, que dans le cas d'une surveillance de zone comportant plusieurs radars, la simple indication du gisement par au moins deux de ces radars permet d'obtenir l'information de distance par triangulation.

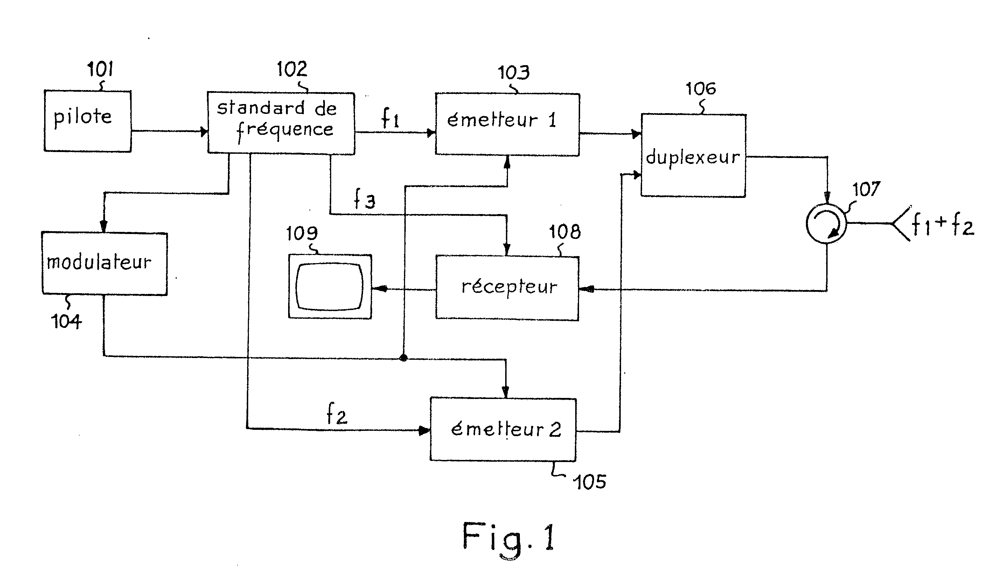

Le radar dont le schéma est représenté sur la figure 1, qui permet de mettre en œuvre le procédé selon l'invention, comporte un étage pilote 101 qui délivre une fréquence pure très stable. Cette fréquence pure permet de piloter un standard de fréquence 102 qui délivre, par exemple par synthèse, l'ensemble des signaux nécessaires au radar.

Un premier signal de fréquence f1, correspondant à l'émission utile du radar, est appliqué à un émetteur de puissance 103. Cet émetteur reçoit par ailleurs un signal de modulation formé d'impulsions, depuis un modulateur 104 qui est lui-même piloté par une autre fréquence issue du standard 102.

Le standard 102 génère également une fréquence f2, correspondant au signal leurre, qui est appliquée à un deuxième émetteur de puissance 105 qui reçoit le même signal de modulation que le premier émetteur 103. La puissance de sortie de ce deuxième émetteur est supérieure à celle du premier dans un rapport d'environ 10 décibels.

Les deux signaux ainsi disponibles sont appliqués à un duplexeur 106 qui permet de découpler les sorties des émetteurs. Ce duplexeur délivre la somme des deux signaux à un circulateur 107 qui alimente une antenne d'émission-réception.

Les signaux reçus par cette antenne, qui comportent d'une part ceux correspondant aux échos et d'autre part ceux correspondant aux brouillages calés sur f2, sont appliqués au circulateur 107 qui les dirige vers un récepteur 108.

Ce récepteur 108 reçoit du standard de fréquence 102 un signal de fréquence f3 qui permet d'hétérodyner les signaux reçus. Ceux-ci sont ensuite amplifiés dans un amplificateur de fréquence intermédiaire muni d'un filtre relativement étroit centré sur f1-f3.

Les signaux correspondant aux échos dus au signal utile fourni par le premier émetteur 103 sont ainsi amplifiés et détectés, et permettent d'alimenter un dispositif de traitement 109 comportant notamment des moyens de visualisation symbolisés sur la figure par un tube cathodique.

Les signaux provenant d'un brouilleur éventuel qui s'est calé sur la fréquence f2, sont transposés dans le récepteur sur une fréquence f2-f3 dont la valeur est supérieure à environ trois fois la bande passante de l'amplificateur à fréquence intermédiaire de ce récepteur. Le gabarit de cette bande passante est tel que les flancs sont suffisamment raides pour empêcher toute détection des signaux due au brouilleur. Selon les possibilités technologiques permettant de réaliser les filtres de l'amplificateur à fréquence intermédiaire, l'écart entre f1 et f2 sera choisi, compte tenu de f3, pour obtenir la réjection souhaitée.

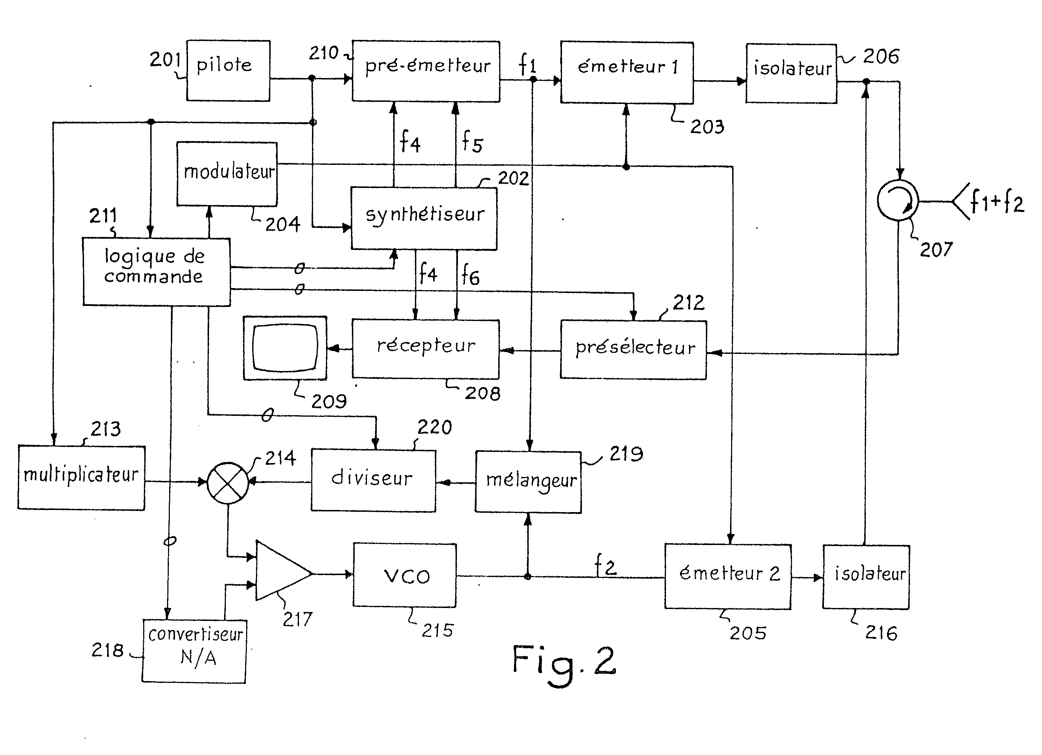

Dans le cas d'un radar agile en fréquence, du type Doppler par exemple, dont le schéma est représenté sur la figure 2, un oscillateur pilote 201 délivre une fréquence très pure et très stable qui permet d'obtenir une cohérence de phase dans tous les circuits du radar.

Le signal fourni par ce pilote est tout d'abord appliqué à un synthétiseur 202 agile en fréquence, qui permet de délivrer deux fréquences f4 et f5. Celles-ci sont appliquées à un préémetteur 210, lequel reçoit également le signal pilote. Ce préémetteur contient des circuits qui permettent, par un double changement de fréquence du signal pilote à l'aide des signaux f4 et f5, d'obtenir un signal à la fréquence utile f1 mais avec un faible niveau.

Le synthétiseur 202, qui est du type agile en fréquence, reçoit par une liaison parallèle des signaux de commande d'une logique de commande 211 qui lui permettent de changer la fréquence f5, et donc la fréquence f1, selon une séquence, de préférence aléatoire à l'intérieur d'un plan de fréquences prédéterminé.

Le signal fourni par le préémetteur 210 est appliqué à un premier émetteur 203 qui l'amplifie à un niveau convenable pour l'émission. Cet émetteur 203 est modulé en impulsions par un modulateur 204, qui reçoit lui-même des signaux de synchronisation de la logique de commande 211. Le signal utile en sortie du premier émetteur est appliqué à un isolateur 206, puis à un circulateur 207 qui alimente une antenne d'émission-réception.

Les signaux reçus par l'antenne, et provenant aussi bien des cibles que des brouilleurs, sont appliqués au circulateur 207 qui les dirige vers un présélecteur 212. Ce présélecteur est un filtre comportant des éléments YIG, qui peut être accordé sur la fréquence utile f1 par des signaux de commande arrivant sur une liaison parallèle de la logique de commande 211. Ceci permet déjà d'atténuer considérablement les signaux des brouilleurs qui, provenant d'un émetteur actif situé à l'emplacement des cibles qui se comportent pour le signal utile comme un émetteur passif, sont nettement plus forts que les échos.

Le signal en sortie de ce présélecteur est appliqué à un récepteur 208 qui reçoit du synthétiseur 202 des signaux f4 et f6, lesquels permettent par hétérodynage un double changement de fréquence. Ce récepteur comporte un amplificateur à fréquence intermédiaire final centré sur la fréquence du signal utile après ce double hétérodynage ; f6 varie bien entendu en fonction des variations de f5, commandées par la logique 211, pour que la fréquence intermédiaire reste constante.

Les signaux utiles sont ainsi seuls à être détectés par le récepteur, car les signaux correspondant au leurre ont été réjectés par le filtre de l'amplificateur à fréquence intermédiaire. Les signaux utiles ainsi détectés sont appliqués à un ensemble de traitement 209.

Le signal provenant du préémetteur est changé de fréquence dans un circuit qui va être décrit ci-après, pour obtenir un signal à la fréquence f2 correspondant au leurre mais de faible puissance. Ce signal est amplifié dans un deuxième émetteur de puissance 205 modulé par le même signal qui module le premier émetteur. Le signal leurre ainsi obtenu est dirigé vers l'antenne par l'intermédiaire d'un isolateur 216 et du circulateur 207.

Pour obtenir le signal à la fréquence f2, on utilise un synthétiseur simplifié fonctionnant à partir d'un signal de référence délivré par un multiplicateur 213 qui reçoit le signal pilote pour garder la référence de phase.

Ce signal de référence est appliqué à un comparateur de phase 214 qui délivre un signal d'erreur, lequel pilote un oscillateur commandé en tension dit VCO 215, par l'intermédiaire d'un amplificateur 217. Cet amplificateur 217 reçoit par ailleurs une tension de prépositionnement délivrée par un convertisseur numérique-analogique 218, qui reçoit un signal de commande parallèle en provenance de la logique de commande 211. Ce signal de prépositionnement permet d'obtenir directement à chaque changement de fréquence d'émission commandé par la logique 211, une valeur approchée de la fréquence du signal leurre, qui est ensuite simplement affinée par la boucle de phase du dispositif. L'oscillateur 215 fournit donc un signal à la fréquence f2 mais de faible niveau, qui est d'une part appliqué à l'émetteur 205, et d'autre part à un mélangeur 219 qui reçoit par ailleurs le signal du préémetteur 210.

Le signal provenant de ce mélange de f1 et de f2 est appliqué à un diviseur à rapport variable 220, lequel reçoit un signal de commande sur une liaison parallèle depuis la logique 211. Ce signal de commande est tel qu'il programme le diviseur 220 pour obtenir à partir de la fréquence f2 désirée la fréquence de référence délivrée par le multiplicateur 213. Ce signal ainsi obtenu par division est appliqué au comparateur 214 qui délivre le signal d'erreur provenant de la comparaison avec le signal de référence.

Ce dispositif permet ainsi de choisir la fréquence du leurre de telle manière qu'elle soit égale à la fréquence du signal utile plus ou moins un nombre entier de fois la fréquence de référence fournie par le pilote 201.

Un tel émetteur permet donc d'émettre un train d'impulsions de fréquence fixe, permettant d'obtenir une mesure Doppler, et de changer ensuite cette fréquence pour éviter le repérage. Une fréquence leurre est simultanément émise à un niveau plus élevé pour parfaire la protection contre les brouilleurs. L'écart et la variation de ces fréquences utile et leurre sont découplés entre elles ce qui renforce encore la protection.

## Revendications

1. Procédé de protection d'un radar contre les brouillages, dans lequel on émet un signal utile formé d'impulsions ayant une première fréquence f1, caractérisé en ce que l'on émet simultanément un signal leurre ayant une amplitude supérieure à celle du signal utile et formé d'impulsions synchrones de celles du signal utile et ayant une deuxième fréquence f2 différente de f1.

2. Procédé selon la revendication 1, caractérisé en ce que l'écart entre les fréquences f1 et f2 permet de rejeter un signal de brouillage à la fréquence f2 reçue par le récepteur du radar.

3. Procédé selon la revendication 2, caractérisé en ce que l'écart entre les fréquences f1 et f2 est supérieur à trois fois la largeur de bande de l'amplificateur à fréquence intermédiaire du récepteur du radar.

4. Procédé selon l'une quelconque des revendications 1 à 3, caractérisé en ce que l'amplitude du signal leurre est suffisante pour accrocher le récepteur d'un dispositif de contre-mesure en lui faisant ignorer le signal utile.

5. Procédé selon la revendication 4, caractérisé en ce que l'amplitude du signal leurre est supérieure d'au moins dix décibels à l'amplitude du signal utile.

6. Procédé selon l'une quelconque des revendications 1 à 5, caractérisé en ce que les signaux utile et leurre sont accrochés en phase.

7. Procédé selon l'une quelconque des revendications 1 à 6, caractérisé en ce que l'on rapproche progressivement la fréquence f2 de la fréquence f1 pour détecter le signal d'un brouilleur accordé sur f2 sans saturer le récepteur du radar et pour déterminer ainsi le gisement de ce brouilleur.

8. Radar pour la mise en œuvre du procédé selon l'une quelconque des revendications 1 à 7, caractérisé en ce qu'il comprend :

des moyens (101, 102) pour générer un premier signal à la fréquence f1, un deuxième signal à la fréquence f2, et un troisième signal d'oscillateur local à la fréquence f3 ;

un modulateur (104) pour générer des signaux de modulation ;

un premier émetteur (103) pour amplifier le premier signal et le moduler sous la commande du modulateur ;

un deuxième émetteur (105) pour amplifier le deuxième signal et le moduler sous la commande du modulateur ;

un duplexeur (106) pour rassembler les signaux amplifiés par les deux émetteurs ;

un circulateur (107) relié à une antenne pour émettre des signaux amplifiés et recevoir des échos à la fréquence f1 et des signaux de brouillage à la fréquence f2 ;

un récepteur (108) pour recevoir du circulateur les signaux de réception, les hétérodyner avec le troisième signal à la fréquence f3, amplifier et détecter les signaux correspondant aux échos, et rejeter les signaux correspondant aux brouilleurs ;

des moyens d'analyse et de visualisation (109) pour traiter les signaux détectés par le récepteur.

9. Radar selon la revendication 8, caractérisé par le fait qu'il comporte un synthétiseur de fréquences (202) agile en fréquence relié à une logique de commande (211) et à des moyens (210) permettant de faire varier la fréquence dudit premier signal (f1).

## Claims

1. Method of protecting a radar against jamming, wherein a useful signal is transmitted which is formed of pulses having a first frequency f1, characterized in that a bait signal is simultaneously transmitted with an amplitude exceeding that of the useful signal and formed of pulses synchronous with those of the useful signal and having a second frequency f2 different from f1.

2. Method according to claim 1, characterized in that the difference between the frequencies f1 and f2 permits a rejection of a jamming signal received by the radar receiver at the frequency f2.

3. Method according to claim 2, characterized in that the difference between the frequencies f1 and f2 exceeds the three-fold bandwidth of the intermediate frequency amplifier of the radar receiver.

4. Method according to any of claims 1 to 3, characterized in that the amplitude of the bait signal is sufficient to lock the receiver of a countermeasure device by causing it to ignore the useful signal.

5. Method according to claim 4, characterized in that the amplitude of the bait signal exceeds the amplitude of the useful signal by at least ten decibels.

6. Method according to any of claims 1 to 5, characterized in that the useful and bait signals are phase-locked.

7. Method according to any of claims 1 to 6, characterized in that the frequency f2 is progressively approached to the frequency f1 to detect the signal of a jammer tuned on f2 without saturation of the radar receiver, to thus determine the bearing angle of this jammer.

8. Radar for performing the method according to any of claims 1 to 7, characterized in that it comprises :

means (101, 102) for generating a first signal at the frequency f1, a second signal at the frequency f2 and a third signal at a local oscillator frequency f3 ;

a modulator (104) for generating modulation signals ;

a first transmitter (103) for amplifying the first signal and modulating it under control of the modulator ;

a second transmitter (105) for amplifying the second signal and modulating it under control of the modulator ;

a duplexer (106) for joining the signals amplified by the two transmitters ;

a circulator (107) connected to an antenna for transmitting amplified signals and receiving echoes at the frequency f1 and jamming signals at the frequency f2 ;

a receiver (108) for receiving reception signals from the circulator, heterodyning them with the third signal of the frequency f3, amplifying and detecting the signals corresponding to the echoes and rejecting the signals corresponding to the jammers ;

analyzing and visualization means (109) for the processing of the signals detected by the receiver.

9. Radar according to claim 8, characterized by the fact that it comprises a frequency agility frequency synthesizer (202) connected to a control logic (211) and to means (210) permitting to vary the frequency of said first signal (f1).

## Patentansprüche

1. Verfahren zum Schutz eines Radars gegen Störungen, bei welchem ein aus Impulsen einer ersten Frequenz f1 gebildetes Nutzsignal ausgesendet wird, dadurch gekennzeichnet, daß gleichzeitig ein Ködersignal mit einer Amplitude gesendet wird, welche größer ist als die des Nutzsignals, und aus Impulsen gebildet ist, die synchron mit denen des Nutzsignals sind und eine zweite Frequenz f2 aufweisen, die verschieden von f1 ist.

2. Verfahren nach Anspruch 1, dadurch gekennzeichnet, daß der Unterschied zwischen den Frequenzen f1 und f2 die Unterdrückung eines Störsignals bei der Frequenz f2 gestattet, die vom Radarempfänger empfangen wird.

3. Verfahren nach Anspruch 2, dadurch gekennzeichnet, daß der Unterschied zwischen den Frequenzen f1 und f2 mehr als das Dreifache der Bandbreite des Zwischenfrequenzverstärkers des Radarempfängers beträgt.

4. Verfahren nach einem der Ansprüche 1 bis 3, dadurch gekennzeichnet, daß die Amplitude des Ködersignals ausreicht, um den Empfänger einer Gegenabwehrvorrichtung einrasten zu lassen, indem dieser das Nutzsignal ignoriert.

5. Verfahren nach Anspruch 4, dadurch gekennzeichnet, daß die Amplitude des Ködersignals wenigstens zehn Dezibel höher als die Amplitude des Nutzsignals ist.

6. Verfahren nach einem der Ansprüche 1 bis 5, dadurch gekennzeichnet, daß das Nutzsignal und das Ködersignal phasenverriegelt sind.

7. Verfahren nach einem der Ansprüche 1 bis 6, dadurch gekennzeichnet, daß die Frequenz f2 progressiv an die Frequenz f1 angenähert wird, um das Signal eines auf f2 abgestimmten Störers zu erfassen, ohne den Radarempfänger zu sättigen, um so den Seitenwinkel dieses Störers zu bestimmen.

8. Radar zur Durchführung des Verfahrens nach einem der Ansprüche 1 bis 7, dadurch gekennzeichnet, daß es umfaßt :

Mittel (101, 102) zur Erzeugung eines ersten Signals der Frequenz f1, eines zweiten Signals der Frequenz f2 und eines dritten Signals der Frequenz f3 als Lokaloszillatorsignal ;

einen Modulator (104) zur Erzeugung von Modulationssignalen ;

einen ersten Sender (103) zur Verstärkung des ersten Signals und Modulierung desselben unter der Steuerung des Modulators ;

einen zweiten Sender (105) zum Verstärken des zweiten Signals und Modulieren desselben unter der Steuerung durch den Modulator ;

einen Duplexer (106) zur Zusammenführung der von den beiden Sendern verstärkten Signale ;

einen Zirkulator (107), welcher mit einer Antenne verbunden ist, um die verstärkten Signale auszustrahlen und Echos bei der Frequenz f1 sowie Störsignale der Frequenz f2 zu empfangen ;

einen Empfänger (108), um vom Zirkulator die Empfangssignale zu empfangen, sie mit dem dritten Signal der Frequenz f3 umzusetzen, die den Echos entsprechenden Signale zu verstärken und zu erfassen und die den Störern entsprechenden Signale zu unterdrücken ;

Analyse- und Sichtdarstellungsmittel (109) für die Verarbeitung der durch den Empfänger erfassten Signale.

9. Radar nach Anspruch 8, dadurch gekennzeichnet, daß er eine frequenzagile Frequenzsyntheseeinrichtung (202) enthält, die mit einer Steuerlogik (211) und mit Mitteln (210) verbunden ist, welche es gestatten, die Frequenz des genannten ersten Signals (f1) zu verändern.

Fig.1

0 073 162

Fig.2